# EUROPÄISCHE PATENTANMELDUNG

(11) **EP 1 030 497 A2**
(43) Veröffentlichungstag der Anmeldung: **23.08.2000**
(21) Anmeldenummer: 00103046.9
(22) Anmeldetag: 15.02.2000
(51) Int. Cl.: H04M 1/02

(54) **Mobiltelefon**

(30) Priorität: 17.02.1999 DE 29902771 U
(71) Anmelder: Huning Umwelttechnik GmbH + Co. KG, 49326 Melle (DE)
(72) Erfinder: Huning, Walter, 49326 Melle (DE)
(74) Vertreter: Busse & Busse Patentanwälte

(57) **Zusammenfassung**

Die Erfindung bezieht sich auf ein Mobiltelefon (1) mit einem ein Display (4), eine Tastatur (5) und dergleichen Bedienungs- und Funktionselemente (3) umgrenzenden bzw. aufweisenden Gehäuse (2). In dem Gehäuse (2) ist eine Öffnungsvorrichtung (6) für Flaschenverschlüsse festlegbar.

## Beschreibung

Die Erfindung bezieht sich auf ein Mobiltelefon mit einem ein Display, eine Tastatur und dergleichen Bedienungs- und Funktionselemente umgrenzenden bzw. aufweisenden Gehäuse.

Mobiltelefone, die sogenannten Handys, werden tagtäglich von einer großen Anzahl von Personen benutzt und vielfach in besonderen Taschen am Körper getragen. Aus Gründen der Erreichbarkeit bevorzugen es viele Personen, diese bei geselligen Veranstaltungen, auf Ausflügen, im Urlaub und dergleichen auf Empfang geschaltet mit sich zu führen.

Durch diesen für bestimmte Personen selbstverständlich gewordenen Gegenstand des alltäglichen Lebens hat sich die Anzahl der mitzuführenden Gegenstände durch solch ein Handy erhöht.

Es ist Aufgabe der vorliegenden Erfindung, ein Mobiltelefon der eingangs genannten Art zur Verfügung zu stellen, mit dem neben dem Telefonieren noch Anderes des alltäglichen Lebens bewerkstelligt werden kann.

Zur Lösung dieser Aufgabe zeichnet sich das Mobiltelefon der eingangs genannten Art dadurch aus, daß in dem Gehäuse eine Öffnungsvorrichtung für Flaschenverschlüsse festlegbar ist. Durch die zusätzlich vorgesehene Öffnungsvorrichtung kann das Mobiltelefon auch zum Öffnen von Flaschenverschlüssen auf z. B. geselligen Veranstaltungen, während eines Ausfluges und dergleichen herangezogen werden, ohne daß es des Mitführens eines separaten, oft vergessenen Flaschenöffners bedarf. Die Teile der mitzuführenden Gegenstände sind dadurch verringert.

Die übliche Gestaltung des Gehäuses eines Mobiltelefons läßt bei uneingeschränkter Funktionstüchtigkeit des eigentlichen Gerätes auch hinreichend Raum, um die Öffnungsvorrichtung vorzusehen. Bevorzugtermaßen kann sie beispielsweise in einer Schmalseite des Gehäuses vorgesehen und als Öffner für Verschlüsse von Wulstrandflaschen ausgebildet sein. Dazu kann eine maulartige Ausnehmung mit entsprechenden Stegen als Öffnungsansätzen vorgesehen sein. Aber auch rückseitig bietet ein übliches Mobiltelefon Raum, um dort maulartig gestaltete Öffnungsansätzen unterzubringen.

Derartige Flaschenöffner können im übrigen auch an besonderen Gehäuseteilen vorgesehen sein, die auswechselbar das Mobiltelefon umgeben, so daß ein derartiges Gehäuse mit integriertem Flaschenöffner auch noch nachträglich vorgesehen werden kann. Insbesondere bietet sich derartiges bei handelsüblichen Mobiltelefonen an, die schon von Hause aus für auswechselbare Gehäuseteile ausgebildet sind.

Eine weitere bevorzugte Ausgestaltung sieht vor, daß rückseitig das Gehäuse mit einer in der Kontur einem üblichen Flaschenöffner angepaßten Ausnehmung versehen ist, in der der Flaschenöffner versenkt anzuordnen ist in seiner Ruhestellung. Wird er für das Öffnen einer Flasche benötigt, kann er aus dieser Ausnehmung herausgenommen werden und in der umgekehrter Position in einen Teil der Ausnehmung einqelegt werden, wonach das Handy mit zusätzlichem Flaschenöffner für das Öffnen von Flaschen bereitsteht.

Zur weiteren Erläuterung wird auch auf die nachfolgende Beschreibung und die Zeichnung verwiesen.

In der Zeichnung zeigen:
Fig. 1 jeweils in einer perspektivischen Ansicht Vorder- und Rückseite eines ersten Ausführungsbeispiels;
Fig. 2 ebenfalls in einer perspektivischen Darstellung Vorder- und Rückseite eines alternativen Ausführungsbeispiels;
Fig. 3 wiederum in einer perspektivischen Darstellung Vorder- und Rückseite eines dritten Ausführungsbeispiels.

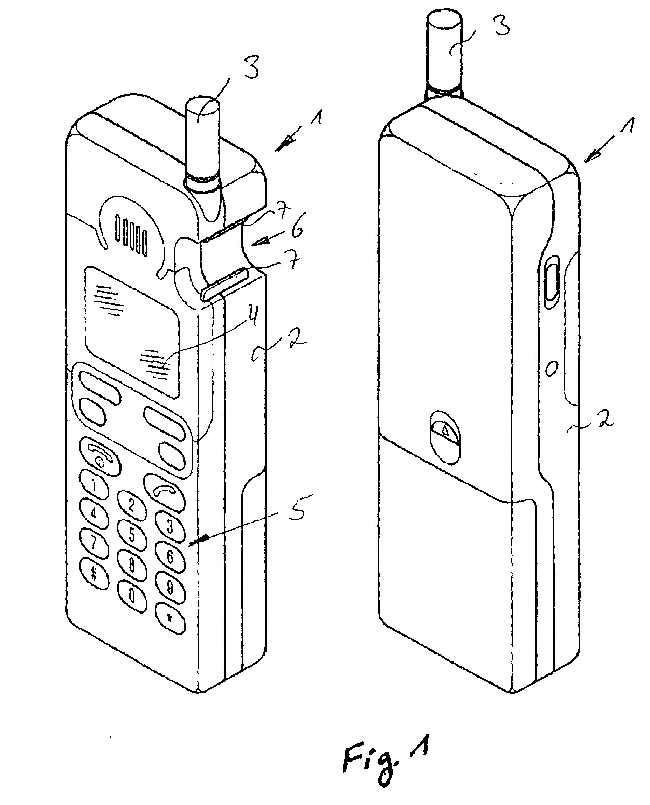

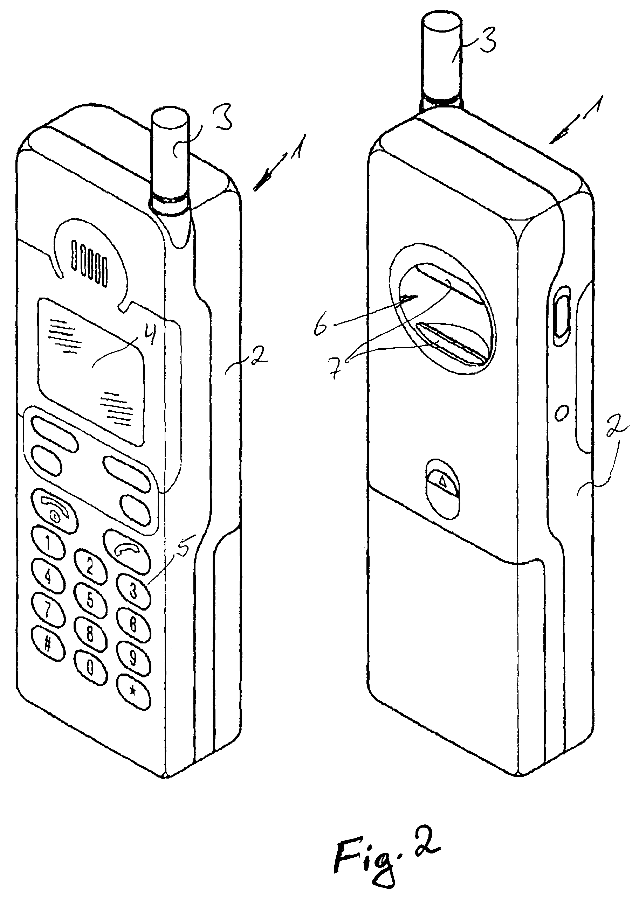

Das in der Zeichnung allgemein mit 1 bezifferte Mobiltelefon hat ein Gehäuse 2, eine Antenne 3, ein Display 4, eine Tastatur 5 und sonstige übliche Bedienungs- und Funktionselemente. In dem Ausführungsbeispiel nach Fig. 1 ist in die seitliche Gehäuseschmalseite die Öffnungsvorrichtung 6 für Flaschenverschlüsse integriert. In diesem Ausführungsbeispiel ist die Öffnungsvorrichtung als Öffner für Verschlüsse von Wulstrandflaschen ausgebildet mit maulartig gestalteten Öffnungsansätzen 7. In dem Ausführungsbeispiel nach Fig. 2 ist die Öffnungsvorrichtung 6 bei ansonsten ähnlichem Aufbau in der rückseitigen Gehäusewandung vorgesehen. Diese ist auch wiederum als Öffner für Verschlüsse von Wulstrandflaschen ausgebildet mit maulartig gestalteten, wiederum mit 7 bezifferten Öffnungsansätzen.

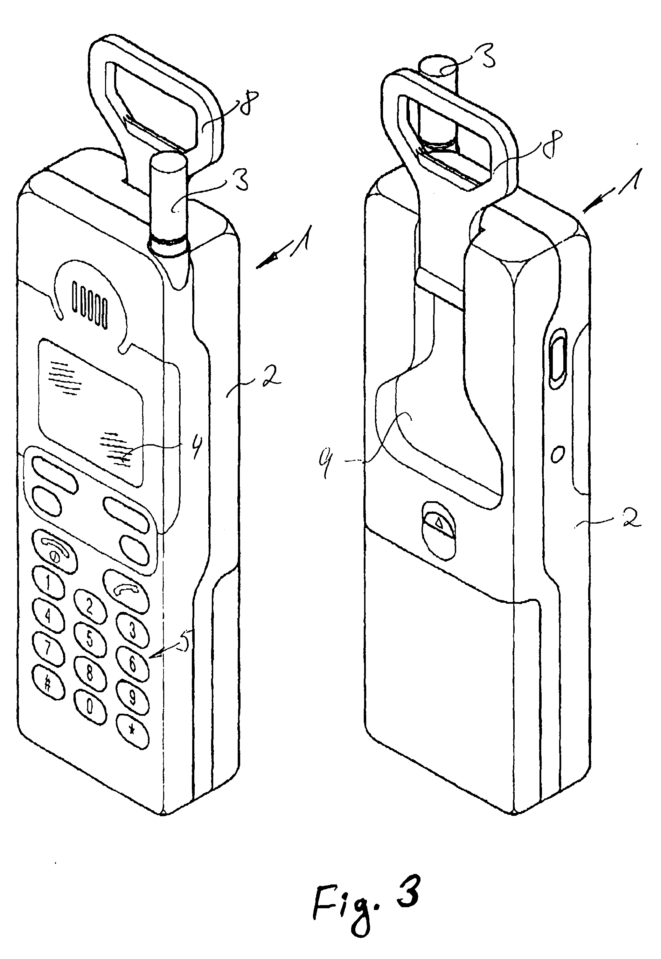

In dem Ausführungsbeispiel nach Fig. 3 ist der Flaschenöffner 8 auswechsel- bzw. herausnehmbar ausgestaltet und in einer rückseitigen, seiner Außenkontur entsprechend angepaßten Ausnehmung 9 versenkt anzuordnen. In dem Ausführungsbeispiel ist die Betriebsstellung gezeigt, in dem er mit seinem Öffnungskopf nach oben über das Handygehäuse hervorsteht und mit seinem Schaftteil in dem schaftartigen Bereich der Ausnehmung 9 festgelegt ist. Dies kann durch Festklemmen, gegebenenfalls unter Vorsehung eines Rast- oder Verriegelungsteils erfolgen. In seiner Ruhestellung, liegt er vollständig versenkt in dieser Ausnehmung, so daß er nicht mehr über das Gehäuse emporragt.

## Patentansprüche

1. Mobiltelefon (1) mit einem ein Display (4), eine Tastatur (5) und dergleichen Bedienungs- und Funktionselemente (3) umgrenzenden bzw. aufweisenden Gehäuse (2), **dadurch gekennzeichnet**, daß in dem Gehäuse (2) eine Öffnungsvorrichtung (6) für Flaschenverschlüsse festlegbar ist.

2. Mobiltelefon nach Anspruch 1, dadurch gekennzeichnet, daß die Öffnungsvorrichtung (6) als Öffner für Verschlüsse von Wulstrandflaschen ausgebildet ist.

3. Mobiltelefon nach Anspruch 1 oder 2, dadurch gekennzeichnet, daß das Gehäuse (2) als auswechselbares Mantelgehäuse ausgebildet ist.

4. Mobiltelefon nach einem der Ansprüche 1 bis 3, dadurch gekennzeichnet,daß die Öffnungsvorrichtung (6) maulartig gestaltete Öffnungsansätze (7) hat.

5. Mobiltelefon nach Anspruch 4, dadurch gekennzeichnet, daß die maulartig gestalteten Öffnungsansätze (7) an einer Schmalseite des Gehäuses (2) vorgesehen sind.

6. Mobiltelefon nach Anspruch 4, dadurch gekennzeichnet, daß die maulartig gestalteten Öffnungsansätze (7) an einer rückseitigen Gehäusewandung vorgesehen sind.

7. Mobiltelefon nach einem der Ansprüche 1 bis 6, dadurch gekennzeichnet, daß die Rückseite der Gehäusewandung eine der Kontur eines Flaschenöffners (8) angepaßte Ausnehmung (9) hat, in die ein Flaschenöffner (8) in einer Betriebsstellung und in einer Ruhestellung anzuordnen ist.

8. Mobiltelefon nach Anspruch 1 bis 7, dadurch gekennzeichnet, daß der Flaschenöffner (8) in der Ruhestellung in der Ausnehmung (9) versenkt angeordnet ist.
